# EUROPÄISCHE PATENTSCHRIFT

(11) **EP 0 838 607 B1**
(45) Veröffentlichungstag und Bekanntmachung des Hinweises auf die Patenterteilung: **24.10.2001**
(21) Anmeldenummer: 97111351.9
(22) Anmeldetag: 04.07.1997
(51) Int. Cl.: F16H 7/12

(54) **Spannvorrichtung für einen Riementrieb**
Belt drive tensioner
Tendeur pour entraînement à courroie

(30) Priorität: 03.08.1996 DE 19631507
(43) Veröffentlichungstag der Anmeldung: 29.04.1998
(73) Patentinhaber: Bayerische Motoren Werke Aktiengesellschaft, 80788 München (DE)
(72) Erfinder: Kampitsch, Klaus, 80636 München (DE)

(56) Entgegenhaltungen:
- EP-A- 0 652 390
- DE-C- 446 446
- DE-C- 508 156

## Beschreibung

Die Erfindung betrifft eine Spannvorrichtung für einen eine topfförmige Riemenscheibe aufweisenden Riementrieb mit einer sich über einen Hebel an einem Federelement abstützenden Spannrolle. Zum bekannten Stand der Technik wird lediglich beispielshalber auf die DE 36 19 577 A1 oder die DE 39 34 884 A1 sowie auf die gattungs bildende DE 446 446 C verwiesen.

Eine wesentliche Anforderung an die bzw. bei der Konstruktion von Maschinenelementen ist es, möglichst wenig Bauraum zu benötigen. Dies gilt auch für die bei einem Riementrieb, wie er beispielsweise zum Antrieb von Hilfsaggregaten an einer Brennkraftmaschine vorgesehen sein kann, benötigte Spannvorrichtung für den Riemen bzw. allgemein für das endlose Zugmittelgetriebe. Eine besonders kompakt bauende Spannvorrichtung, die im übrigen auch als vorteilhafte Vormontageeinheit ausgebildet sein kann, aufzuzeigen, ist daher Aufgabe der vorliegenden Erfindung.

Zur Lösung dieser Aufgabe ist vorgesehen, daß der Hebel, der die Spannrolle trägt und der sich zur Erfüllung der Spannfunktion an einem Federelement abstützt und um die Drehachse der Riemenscheibe verschwenkbar ist, als Spiralfeder ausgebildet und im wesentlichen innerhalb der topfförmigen Riemenscheibe angeordnet ist. Vorzugsweise ist das Federelement bzw. die Spiralfeder im wesentlichen koaxial zur Drehachse der Riemenscheibe angeordnet, wobei jedoch durch einen gewählten Achsversatz durch die dann vorliegenden Hebelverhältnisse auf einfache Weise eine gewünschte Federkrat-Charakteristik einstellbar ist. Besonders vorteilhafte Aus- und Weiterbildungen der Erfindung sind Inhalt der Unteransprüche.

Näher erläutert wird die Erfindung anhand eines bevorzugten Ausführungsbeispieles, wobei in
- Fig. 1: die Spannvorrichtung im komplett montierten Zustand inklusive einer Riemenscheibe sowie einem von der Riemenscheibe angetriebenen Aggregat perspektivisch gezeigt ist, und in
- Fig. 2: ein Schnitt hiervon durch die Mittenebene des Hebels der Spannvorrichtung dargestellt ist. Weiterhin zeigt
- Fig. 3: die Spannvorrichtung mit Riemenscheibe und Aggregat in einer Explosionsdarstellung, sowie
- Fig. 4: zusätzlich die Spannvorrichtung selbst in perspektivischer Explosionsdarstellung.

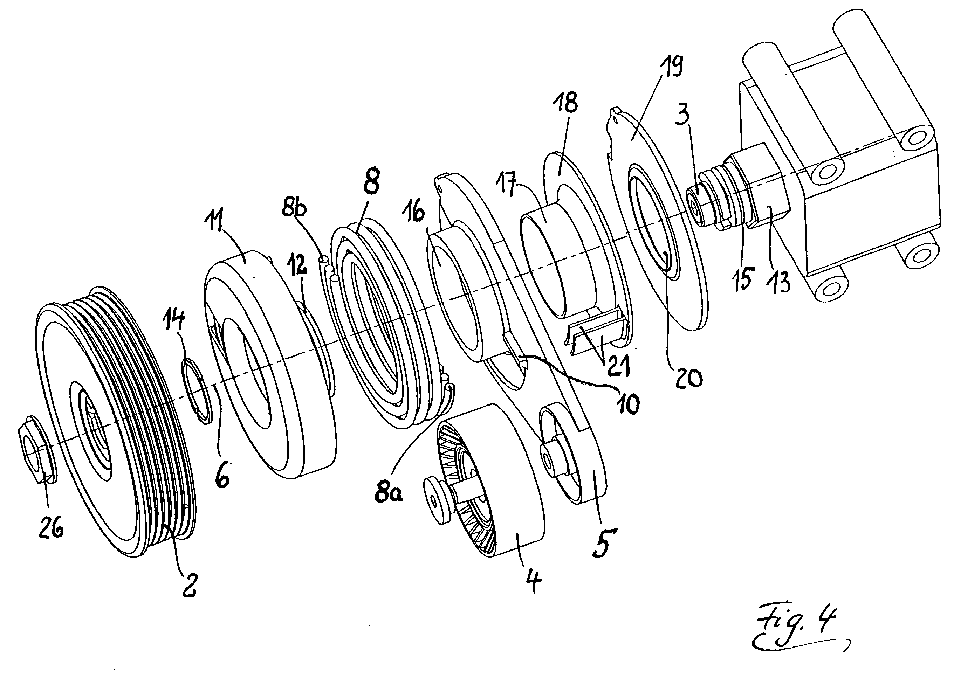

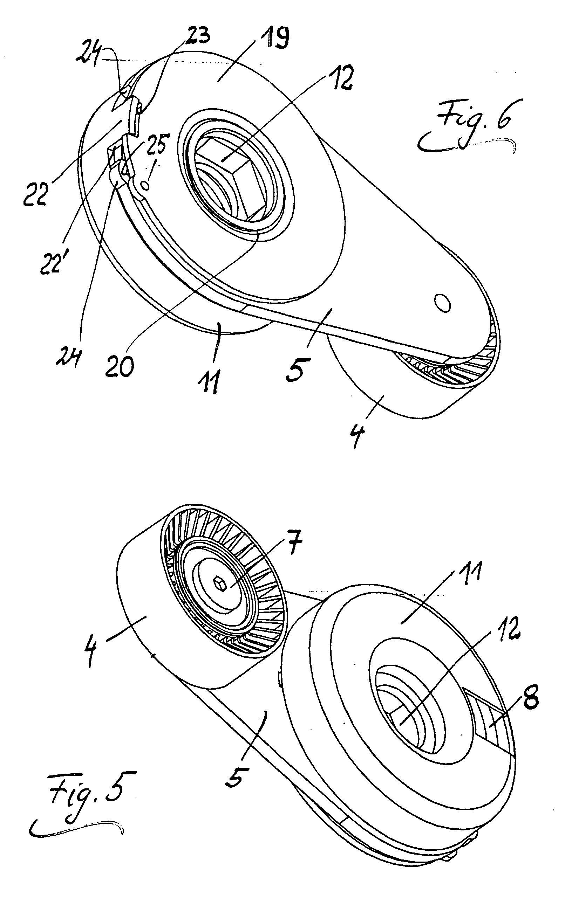

Schließlich ist in den Fig. 5 und 6 die Spannvorrichtung im vormontiertem Zustand in zwei Perspektivansichten gezeigt.

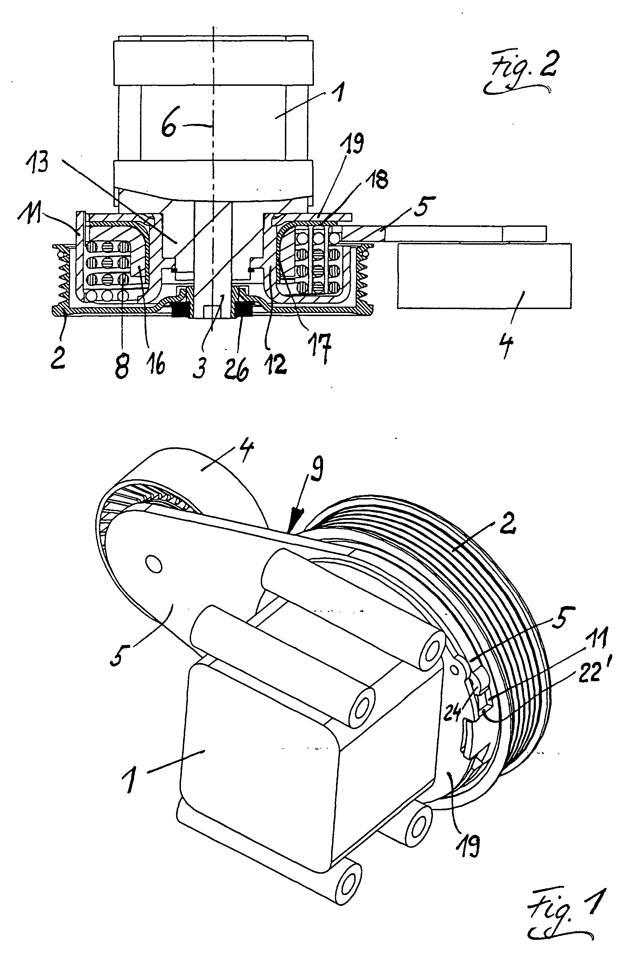

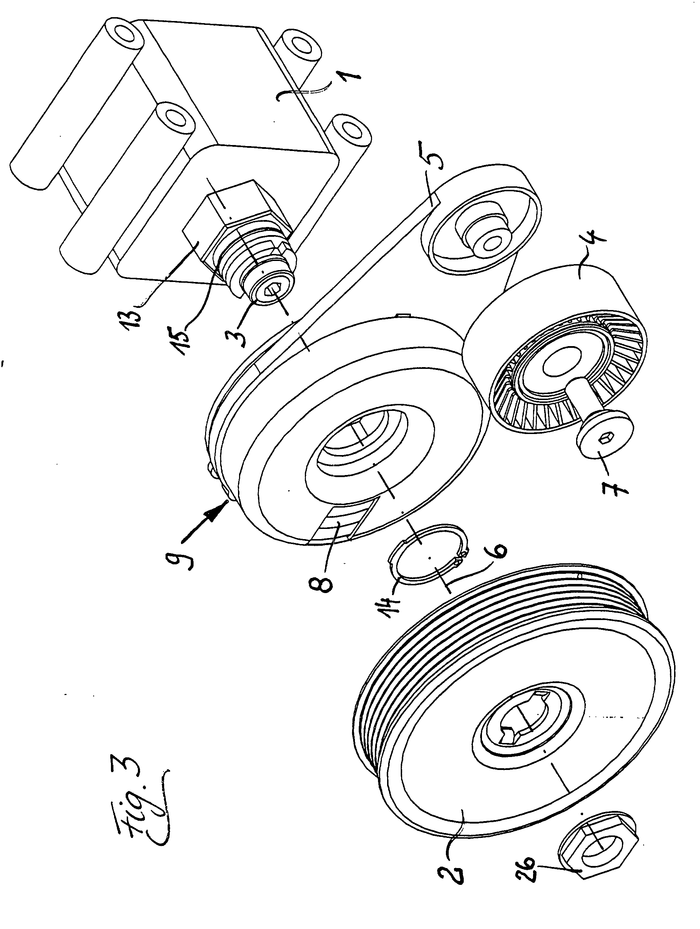

Ein ansonsten nicht näher dargestellter, jedoch üblicher und daher dem Fachmann bekannter Riementrieb dient dazu, ein Aggregat 1 anzutreiben, bei welchem es sich beispielsweise um eine Pumpe handeln kann. Dieses Aggregat 1 besitzt hierzu eine Welle, auf der eine Riemenscheibe 2 des Riementriebes angeordnet ist, und welche im folgenden als Riemenscheiben-Welle 3 bezeichnet wird. Ein weiteres Bestandteil dieses Riementriebes ist eine Spannrolle 4, über welche der Riemen geführt wird, und welche sich über einen Hebel 5 an einem Federelement abstützt, dessen Kraft wie üblich in den Riementrieb eingeleitet wird und somit dem Riemen die erforderliche Spannung verleiht. Die Spannrolle 4 ist hierzu auf dem Hebel 5 drehbar gelagert, während letzterer um die Drehachse 6 der Riemenscheibe 2 bzw. der Riemenscheiben-Welle 3 verschwenkbar ist (vgl. Fig. 3, in welcher im übrigen auch die Befestigung der Spannrolle 4 am Hebel 5 mittels einer Schraube 7 dargestellt ist). Die Spannrolle 4, der Hebel 5 und das in Fig. 3 nur teilweise sichtbare Federelement 8 zum Aufbringen der erforderlichen Spannkraft sind dabei Bestandteil der im folgenden ausführlich erläuterten, eine Vormontageeinheit bildenden Spannvorrichtung, die in den Fig. 1 und 3 in ihrer Gesamtheit mit der Bezugsziffer 9 bezeichnet ist.

Fig. 4 zeigt diese Spannvorrichtung 9 in einer Explosions-Perspektivdarstellung. Man erkennt das als Spiralfeder ausgebildete Federelement 8, das sich mit seinem ersten Ende 8a an einer Nase 10 des Hebels 5 abstützt, während für das zweite Ende 8b ein ebenso ausgebildeter, jedoch nicht gezeigter Abstützpunkt in einem Gehäuseteil 11 vorgesehen ist, welches unter anderem das Federelement 8 aufnimmt. Dieses Gehäuseteil 11 ist demzufolge quasi topfförmig ausgebildet, ebenso wie die Riemenscheibe 2, wobei die Dimensionen des Federelementes 8 und des Gehäuseteiles 11 so gewählt sind, daß dieses Gehäuseteil 11 mit dem Federelement 8 im wesentlichen innerhalb der topfförmigen Riemenscheibe 2 angeordnet werden können (vgl. Fig. 1 und Fig. 2). Dabei ist das Federelement 8 im wesentlichen koaxial zur Drehachse 6 der Riemenscheibe 2 angeordnet, um den Raum innerhalb der topfförmigen Riemenscheibe 2 optimal auszunutzen. Durch einen gewissen Achsversatz zwischen der nicht dargestellten Achse des spiralförmigen Federelmentes 8 sowie der Drehachse 6 läßt sich jedoch auch eine gewünschte Ferdercharakteristik einstellen.

Das Gehäuseteil 11 weist einen innenliegenden, die Riemenscheiben-Welle 3 umgebenden Bund 12 auf und ist mit diesem Bund 12 drehfest mit dem Aggregat 1, aus welchem die Riemenscheiben-Welle 3 herausragt, verbunden. Hierzu besitzt das Aggregat 1 einen Sechskantabsatz 13, auf den der innenseitig ebenfalls sechskantförmige Bund 12 (vgl. Fig. 6) aufgesteckt werden kann. Das Gehäuseteil 11 ist somit in Radialrichtung formschlüssig mit dem Aggregat 1 verbunden, wobei anstelle dieser formschlüssigen Sechskant-Verbindung auch jede andere beliebige formschlüssige Verbindung gewählt werden kann. In Axialrichtung, d. h. in Richtung der Drehachse 6 ist das Gehäuseteil 11 mittels eines Sicherungsringes 14 auf der Riemenscheiben-Welle 3 festgelegt, wie Fig. 3 und Fig. 4 zeigt. Hierzu wird der Sicherungsring 4 in eine entsprechende Nut 15 in der Riemenscheiben-Welle 3 eingebracht.

Wie bereits erläutert nimmt das Gehäuseteil 11 zunächst das Federelement 8 auf. Rechtsseitig gemäß Fig. 4 schließt sich hieran der Hebel 5 an. Da dieser Hebel 5 um die Drehachse 6 verschwenkbar und demzufolge gemeinsam mit dem Gehäuseteil 11 auf die Riemenscheiben-Welle 3 aufsteckbar sein soll, weist der Hebel eine zentrale Durchgangsöffnung für diese Riemenscheiben-Welle 3 auf, wobei der Rand dieser Durchgangsöffnung als Lagersitz 16 ausgebildet ist. Mit diesem Lagersitz 16 ist der Hebel 5 auf einem umlaufenden Steg 17 einer sogenannten Dämpfungsplatte 18 gelagert, die sich gemäß Fig. 4 rechtsseitig an den Hebel 5 anschließt.

Die Dämpfungsplatte 18 liegt wie ersichtlich zwischen der rechtsseitigen Stirnseite des Hebels 5 sowie einer sogenannten Reibplatte 19, die mit dem Gehäuseteil 11 drehfest verbunden ist und die das Gehäuseteil 11 zum Aggregat 1 hin abschließt (vgl. u. a. Fig. 6). Da - wie bereits erläutert - die Spannvorrichtung 9 in ihrer Gesamtheit auf die Riemenscheiben-Welle 3 aufsteckbar sein soll, muß demzufolge nicht nur die Dämpfungsplatte 18, sondern auch die Reibplatte 19 einen dementsprechenden zentralen Durchbruch 20 auweisen, wobei der nicht näher bezeichnete Durchbruch in der Dämpfungsplatte 18 an seinem Rand den bereits erläuterten Steg 17 besitzt, während der Randbereich des Durchbruchs 20 der Reibplatte 19 auf den Bund 12 des Gehäuseteiles 11 quasi aufgebördelt ist, wie Fig. 2 und Fig. 6 zeigen.

Die Funktion der Reibplatte 19 besteht nicht nur darin, die Spannvorrichtung 9 in ihrer Gesamtheit zum Aggregat 1 hin abzuschließen, sondern sie dient zusammen mit der Dämpfungsplatte 18 auch als Bewegungsdämpfer für den Hebel 5. Eine derartige Dämpfungsfunktion sollte - wie dem Fachmann bekannt ist - jede Riementrieb-Spannvorrichtung aufweisen, um extreme Auslenkungen des Hebels 5 bzw. der Spannrolle 4 bezüglich des Riementriebes zu vermeiden. Bei der hier beschriebenen Spannvorrichtung 9 erfolgt diese Dämpfungsfunktion durch Reibungsdämpfung, wobei der Hebel 5 indirekt gegen die Reibplatte 19 gepreßt wird, und zwar direkt gegen die Dämpfungsplatte 18, welche ihrerseits an der Reibplatte 19 anliegt. Die erforderliche Anpreßkraft wird dabei auf den Hebel 5 in Richtung auf die Dämpfungsplatte 18 bzw. auf die Reibplatte 19 durch das Federelement 8 aufgebracht. Dies ist aufgrund der Ausbildung des Federelementes 8 als Spiralfeder ohne weiteres möglich, wobei im vorliegenden Ausführungsbeispiel zur Erzeugung der erforderlichen Kräfte dieses Federelement 8 aus mehreren, nämlich drei mehrlagig angeordneten Spiralfedern besteht. Diese Spiralfedern bzw. dieses Federelement 8 erzeugen somit nicht nur die erforderliche Spannkraft, indem der Hebel 5 mit der Spannrolle 4 entsprechend ausgelenkt wird, sondern zugleich die nötige Dämpfungskraft, indem der Hebel 5 letztlich gegen die Reibplatte 19 gepreßt wird. Da der Hebel 5 sowie die Reibplatte 19 metallisch sind, ist - um ein Fressen dieser beiden Bauteile zu verhindern - die beispielsweise aus einem geeigneten Kunststoff bestehende Dämpfungsplatte 18 zwischengelegt.

Wie Fig. 4 zeigt, sind an die Dämpfungsplatte 18 zwei Abstandshalter 21 angeformt, die eine geeignete, nicht näher bezeichnete Aussparung im Hebel 5 durchdringen und zwischen die einzelnen Windungen der einzelnen Spiralfedern des Federelementes 8 hineinragen. Deren einzelne Windungen bzw. Spiralfedern werden somit durch die Abstandshalter 21 voneinander getrennt gehalten, so daß eine sichere Funktion des Federelementes 8 gewährleistet ist. Im übrigen stellen diese Abstandshalter 21 im Zusammenwirken mit dem nicht näher bezeichneten Durchbruch im Hebel 5 sicher, daß sich die Dämpfungsplatte 18 nicht gegenüber dem Hebel 5 verdrehen kann. Dies bedeutet, daß der Hebel 5 bei einer Verschwenkbewegung um die Drehachse die Dämpfungsplatte 18 mitnimmt, so daß letztlich diese Dämpfungsplatte 18 gegenüber der Reibplatte 19 reibend bewegt wird, da letztere drehfest mit dem Gehäuseteil 11 und dieses wiederum drehfest mit dem Aggregat 1 verbunden ist.

Zur Gewährleistung einer exakten Positionierung sowie einer drehfesten Verbindung zwischen Reibplatte 19 und Gehäuseteil 11 - hierfür ist die Bördelverbindung zwischen dem Rand des Durchbruches 20 sowie dem Endbereich des Bundes 12 unter Umständen nicht ausreichend - ist eine vom Gehäuseteil 11 abstehende und mit der Reibplatte 19 zusammenwirkende Verdrehsicherung 22 vorgesehen, die in eine entsprechende Aussparung 23 in der Reibplatte 19 hineinragt, wie insbesondere Fig. 6 zeigt. Hierin, aber auch in Fig. 1 erkennt man ferner, daß diese Verdrehsicherung 22 mit ihren beiden Seitenflanken 22' Begrenzungsanschläge für den die Spannrolle 4 tragenden Hebel 5 bildet. Letzterer ragt dementsprechend zumindest in diesem Bereich der Verdrehsicherung 22 zwischen dem Gehäuseteil 11 sowie der Reibplatte 19 aus der ansonsten im wesentlichen geschlossenen Spannvorrichtung 9 heraus und weist entsprechende, mit der Verdrehsicherung 22 zusammenwirkende Vorsprünge 24 auf. In einem der beiden Vorsprünge 24 des Hebels 5 ist ferner ein Auge 25 vorgesehen, welches mit einem ebensolchen Auge 25 in der Reibplatte 19 zur Deckung gebracht werden kann. Ist dies geschehen, so kann durch diese beiden Augen 25 im Hebel 5 sowie in der Reibplatte 19 ein Montagestift durchgesteckt werden, so daß diese Spannvorrichtung 9 als komplette Vormontageeinheit mit einer definierten Position des Hebels 5 angeliefert und montiert werden kann. Nach erfolgter Montage wird selbstverständlich dieser Montagestift aus den beiden Augen 25 entfernt, wonach der Hebel 5 seine eigentliche Funktion ausüben kann, nämlich in die in Fig. 6 oder auch in Fig. 1 dargestellte Position gelangen kann und auf den Riemen des Riementriebes die benötigte Spannkraft aufbringen kann.

Bereits kurz angesprochen wurde, daß das im wesentlichen topfförmige Gehäuseteil 11 zusammen mit dem integrierten Federelement 8 im wesentlichen innerhalb der topfförmigen Riemenscheibe 1 angeordnet werden kann, wie Fig. 1 und Fig. 2 zeigt. Eine gemäß Fig. 5 oder Fig. 6 als Vormontageeinheit angelieferte Spannvorrichtung 9 kann somit auf das Aggregat 1 aufgesteckt und über den Sechskantabsatz 13 mit ihrem Gehäuseteil 11 drehfest mit diesem Aggregat 1 verbunden werden. Anschließend erfolgt die Festlegung in Axialrichtung durch den Sicherungsring 14, wonach die Riemenscheibe 2 auf die Riemenscheiben-Welle 3 aufgesteckt und schließlich mit der Sicherungsmutter 26 (vgl. Fig. 3 und Fig. 4) fixiert werden kann. Dabei nimmt die Riemenscheibe 2 das Gehäuseteil 11 der Spannvorrichtung 9 im wesentlichen vollständig in ihrem Innenraum auf. Dies ergibt die äußerst vorteilhafte und kompakte Anordnung, die insbesondere aus den Fig. 1 und 2 ersichtlich wird. Möglich ist diese äußerst kompakte Gestaltung insbesondere dadurch, daß der Hebel 5 der Spannvorrichtung 9 um die Drehachse 6 der Riemenscheibe 2 verschwenkbar und das als Spiralfeder ausgebildete Federelement 8 vorzugsweise bzw. im wesentlichen koaxial hierzu und ebenfalls im wesentlichen innerhalb der topfförmigen Riemenscheibe 2 angeordnet ist. Dabei können selbstverständlich eine Vielzahl von Details insbesondere konstruktiver Art durchaus abweichend vom gezeigten Ausführungsbeispiel gestaltet sein, ohne den Inhalt der Patentansprüche zu verlassen.

## Patentansprüche

1. Spannvorrichtung für einen eine topfförmige Riemenscheibe (2) aufweisenden Riementrieb mit einer sich über einen Hebel (5), der um die Drehachse (6) der Riemenscheibe (2) verschwenkbar ist, an einem Federelement (8) abstützenden Spannrolle (4),
**dadurch gekennzeichnet, daß** das als Spiralfeder ausgebildete Federelement (8) im wesentlichen innerhalb der topfförmigen Riemenscheibe (2) angeordnet ist.

2. Spannvorrichtung nach Anspruch 1,
**dadurch gekennzeichnet, daß** ein ebenfalls im wesentlichen innerhalb der Riemenscheibe (2) liegendes, das Federelement (8) aufnehmendes Gehäuseteil (11) den zweiten Abstützpunkt für das Federelement (8) enthält, einen innenliegenden, die Riemenscheiben-Welle (3) umgebenden Bund (12) aufweist, und mit diesem Bund (12) drehfest mit einem Aggregat (1), aus welchem die Riemenscheiben-Welle (3) herausragt, verbunden ist.

3. Spannvorrichtung nach Anspruch 2,
**dadurch gekennzeichnet, daß** das Gehäuseteil (11) in Radialrichtung formschlüssig mit dem Aggregat (1) verbunden und in Axialrichtung mittels eines Sicherungsringes (14) auf der Riemenscheiben-Welle (3) festgelegt ist.

4. Spannvorrichtung nach einem der vorangegangenen Ansprüche,
**dadurch gekennzeichnet, daß** mit dem Gehäuseteil (11) eine Reibplatte (19), an der der Hebel (5) direkt oder indirekt anliegt, drehfest verbunden ist.

5. Spannvorrichtung nach einem der vorangegangenen Ansprüche,
**dadurch gekennzeichnet, daß** die Reibplatte (19) das Gehäuseteil (11) zum Aggregat (1) hin abschließt und hierzu auf den die Riemenscheiben-Welle (3) umgebenden Bund (12) des Gehäuseteiles (11) aufgebördelt ist.

6. Spannvorrichtung nach einem der vorangegangenen Ansprüche,
**dadurch gekennzeichnet, daß** zwischen der Reibplatte (19) sowie dem Hebel (5) eine Dämpfungsplatte (18) vorgesehen ist, die einen den Bund (12) des Gehäuseteiles (11) umgebenden Steg (17) aufweist, auf welchem der Hebel (5) drehbar gelagert ist.

7. Spannvorrichtung nach einem der vorangegangenen Ansprüche,
**dadurch gekennzeichnet, daß** das Federelement (8) aus mehrlagig angeordneten Spiralfedern besteht, die durch an der Dämpfungsplatte (18) vorgesehene Abstandshalter (21) geführt sind, und neben der Riementrieb-Spannkraft auf den Hebel (5) zusätzlich eine Anpreßkraft gegen die Dämpfungsplatte (18) bzw. gegen die Reibplatte (19) aufbringt.

8. Spannvorrichtung nach einem der vorangegangenen Ansprüche,
**dadurch gekennzeichnet, daß** eine vom Gehäuseteil (11) abstehende, mit der Reibplatte (19) zusammenwirkende Verdrehsicherung (22) mit ihren beiden Seitenflanken (22') Begrenzungsanschläge für den die Spannrolle (4) tragenden Hebel (5) bildet.

## Claims

1. A device for tightening a belt drive comprising a pot-shaped belt pulley (2) and a tightener (4) which abuts a spring element (8) via a lever (5) which is pivotable around the axis (6) of rotation of the belt pulley (2),
**characterised in that** the element (8), in the form of a spiral spring, is disposed substantially inside the pot-shaped belt pulley (2).

2. A tightening device according to claim 1,
**characterised in that** a casing part (11) receiving the spring element (8) and likewise disposed substantially inside the belt pulley (2) contains the second supporting point for the spring element (8), has an internal collar (12) surrounding the belt pulley shaft (3), and is non-rotatably connected by the collar (12) to a unit (1) from which the belt pulley shaft (3) extends.

3. A tightening device according to claim 2,
**characterised in that** the casing part (11) is positively connected to the unit (1) in the radial direction and is fastened on the belt pulley shaft (3) by a securing ring (14) in the axial direction.

4. A tightening device according to any of the preceding claims,
**characterised in that** a friction plate (19) against which the lever (5) directly or indirectly abuts is non-rotatably connected to the casing part (11).

5. A tightening device according to any of the preceding claims,
**characterised in that** the friction plate (19) shuts off the casing part (11) from the unit (1) and to this end is flanged on the collar (12) of the casing part (11) surrounding the belt pulley shaft (3).

6. A tightening device according to any of the preceding claims,
**characterised in that** a damping pad (18) is provided between the friction plate (19) and the lever (5) and has a web (17) which surrounds the collar (12) of the casing part (11) and on which the lever (5) is rotatably mounted.

7. A tightening device according to any of the preceding claims,
**characterised in that** the spring element (8) is made up of spiral springs arranged in a number of layers and guided by spacers (21) provided on the damping pad (18), and in addition to the belt-drive tightening force exerts a force pressing the lever (5) against the damping pad (18) and/or against the friction plate (19).

8. A tightening device according to any of the preceding claims,
**characterised in that** an anti-twist means (22) projecting from the casing part (11) and co-operating with the friction plate (19) has two side flanks (22') which form limiting abutments for the lever (5) bearing the tightener (4).

## Revendications

1. Tendeur pour un entraînement à courroie, utilisant une poulie de courroie (2) en forme de pot et comportant un galet tendeur (4) s'appuyant sur un élément élastique (8) par l'intermédiaire d'un levier (5) qui peut basculer autour de l'axe de rotation (6) de la poulie de courroie (2),
**caractérisé en ce que**
l'élément élastique (8) constitué par un ressort spiral est monté essentiellement à l'intérieur de la poulie de courroie (2) en forme de pot.

2. Tendeur selon la revendication 1,
**caractérisé en ce qu'**
une partie de boîtier (11), située également essentiellement à l'intérieur de la poulie de courroie (2) et accueillant l'élément élastique (8), contient le second point d'appui de cet élément (8) et présente à l'intérieur un rebord périphérique (12) entourant l'arbre (8) de la poulie de courroie, ce rebord (12) étant solidaire en rotation avec un appareil (1) d'où sort l'arbre (3) portant la poulie à courroie.

3. Tendeur selon la revendication 2,
**caractérisé en ce que**
la partie de boîtier (11) est en direction radiale, reliée par combinaison de formes à l'appareil (1) tandis qu'en direction axiale elle est fixée sur l'arbre (3) par un circlip (14).

4. Tendeur selon l'une quelconque des revendications précédentes,
**caractérisé en ce qu'**
à la partie de boîtier (1) est reliée, avec solidarité en rotation, une plaque de friction (19) sur laquelle est appliqué directement ou indirectement le levier (5).

5. Tendeur selon l'une quelconque des revendications précédentes,
**caractérisé en ce que**
la plaque de friction (19) obture la partie de boîtier (11) vers l'appareil (1) et pour cela est bord à bord avec le rebord périphérique (12) de la partie de boîtier (11) entourant l'arbre (3).

6. Tendeur selon l'une quelconque des revendications précédentes,
**caractérisé en ce qu'**
entre la plaque de friction (19) et le levier (5) est montée une plaque d'amortissement (18) qui comporte un collet périphérique (17) entourant le rebord (12) de la partie de boîtier (11) et sur lequel le levier (5) est monté tournant.

7. Tendeur selon l'une quelconque des revendications précédentes,
**caractérisé en ce que**
l'élément élastique (8) est composé par des ressorts spiraux en plusieurs couches, guidés par des espaceurs (21) prévus sur la plaque d'amortissement (18) et en plus de la force de tension de l'entraînement à courroie, cet élément exerce sur le levier (5) une force de pression dirigée vers la plaque d'amortissement (18) et la plaque de friction (19).

8. Tendeur selon l'une quelconque des revendications précédentes,
**caractérisé en ce qu'**
une sécurité antirotation (22), faisant saillie sur la partie de boîtier (11) et coopérant avec la plaque de friction (19), constitue par ses deux flancs latéraux (22') des butées délimitant les mouvements du levier (5) portant le galet de courroie (4).
